Europäisches Patentamt

European Patent Office

Office européen des brevets

(11) Veröffentlichungsnummer: **0 014 175**
**B1**

(12) **EUROPÄISCHE PATENTSCHRIFT**

(45) Veröffentlichungstag der Patentschrift:
15.12.82

(21) Anmeldenummer: 80730003.3

(22) Anmeldetag: 17.01.80

(51) Int. Cl.³: **H 02 H 7/045, H 02 H 3/28**

(54) Differentialschutzanordnung für einen mehrphasigen Transformator.

(30) Priorität: 17.01.79 JP 4351/79

(43) Veröffentlichungstag der Anmeldung:
06.08.80 (Patentblatt 80/16)

(45) Bekanntmachung des Hinweises auf die Patenterteilung: 15.12.82 Patentblatt 82/50

(84) Benannte Vertragsstaaten:
**CH DE GB SE**

(56) Entgegenhaltungen:
**DE A 2 322 981
DE B 1 100 781
DE B 1 257 258
DE C 943 179
GB A 767 189
US A 3 218 516**

(73) Patentinhaber: **FUJI ELECTRIC CO. LTD.
1-1, Tanabeshinden, Kawasaki-ku
Kawasaki 210 (JP)**

(72) Erfinder: **Saitou, Mitsuo
66-2 Sanda-machi Hachiouji-shi
Tokyo (JP)**

(74) Vertreter: **Mehl, Ernst, Dipl.-Ing.
Postfach 22 01 76
D-8000 München 22 (DE)**

# 0 014 175

## Differentialschutzanordnung für einen mehrphasigen Transformator

Die Erfindung bezieht sich auf eine Differentialschutzanordnung für einen mehrphasigen Transformator mit jeweils einer Differentialschutzeinrichtung für jede Phase, wobei jede Differentialschutzeinrichtung ein auf die Grundwelle abgestimmtes Filter mit nachgeordnetem Gleichrichter und ein auf die 2. Harmonische abgestimmtes weiteres Filter mit nachgeordnetem weiteren Gleichrichter enthält.

Differentialschutzanordnungen dieser Art (JP-OS/53-120155/1978) werden zur Überwachung von insbesondere dreiphasigen Transformatoren benutzt und ermöglichen es, eine fehlerhafte Auslösung oder eine Nichtauslösung zu vermeiden, die durch beim Einschalten des Transformators oder nach Beseitigung eines Kurzschlusses entstehende, kurzzeitig hohe Magnetisierungsströme (Rush-Ströme) verursacht werden könnte. Zur Vermeidung von fehlerhaften Funktionen infolge solcher Rush-Ströme dient ein System, das die höheren Harmonischen unterdrückt, wobei die Tatsache ausgenutzt wird, daß der Rush-Strom erheblich größere Anteile höherer Harmonischer, insbesondere der 2. Harmonischen, enthält, als dies bei einem Strom im Fehlerfalle gegeben ist. Bei dem bekannten System wird in dem Falle, in dem höhere Harmonische einen Anteil von 15 oder mehr % des durch die Differentialschutzeinrichtung jeder Phase fließenden Stromes ausmachen, dieser Strom für einen Rush-Strom gehalten, so daß die Differentialschutzanordnung nicht anspricht.

Jüngere Berechnungen haben indessen erwiesen, daß die 2. Harmonische in einem Rush-Strom in einem geringeren Umfange als erwartet enthalten ist. Im Falle eines dreiphasigen Transformators wird der Anteil der 2. Harmonischen im Rush-Strom jeder Phase des Transformators nicht immer größer als 15 %. Deshalb kann die Differentialschutzeinrichtung einer Phase fehlerhaft auslösen. Um eine derartige fehlerhafte Auslösung zu vermeiden, kann man daran denken, daß Unterdrückungs-Niveau für die höheren Harmonischen auf 5 % festzulegen. Diese hohe Empfindlichkeit kann jedoch zu einem fehlerhaften Nichtauslösen führen, wenn in einem Strom im Falle eines inneren Fehlers ein größerer Anteil von höheren Harmonischen enthalten ist.

Die bekannte Differentialschutzanordnung hat daher den Nachteil, daß es schwierig ist, bei Rush-Strömen eine Nichtauslösung zu bewirken und eine normale Betätigung zu erreichen, wenn bei einem inneren Fehler ein Anteil höherer Harmonischer auftritt.

Bei einer anderen bekannten Differentialschutzanordnung (US-A-3 218 516) sind die den auf die Grundwelle abgestimmten Filtern der einzelnen Phasen nachgeordneten Gleichrichter ausgangsseitig an einen gemeinsamen Widerstand derart angeschlossen, daß an diesem Widerstand eine Spannung entsteht, die den jeweils größten Meßwert am Ausgang der Gleichrichter entspricht. Entsprechend sind die den auf die 2. Harmonische abgestimmten weiteren Filtern nachgeordneten Gleichrichter an einem zusätzlichen Widerstand angeschlossen. Die an diesem Widerstand abfallende weitere Spannung entspricht demzufolge dem jeweils größten Wert am Ausgang der weiteren Gleichrichter. Eine nennenswerte Verbesserung in der Stabilisierung bei Rush-Strömen und der Vermeidung von fehlerhaften Nichtauslösungen bei inneren Fehlern mit einem größerem Anteil 2. Harmonischer ist dadurch nicht erreicht.

Der Erfindung liegt daher die Aufgabe zugrunde, eine Differentialschutzanordnung vorzuschlagen, die mit Sicherheit zwischen Rush-Strömen beim Einschalten des Transformators oder beim Beseitigen eines Kurzschlusses und Strömen bei einem inneren Fehler im zu überwachenden mehrphasigen Transformator unterscheiden kann und somit vor einer Fehlauslösung beim Auftreten von Rush-Strömen bzw. einem Nichtauslösen bei einem inneren Fehler geschützt ist.

Zur Lösung dieser Aufgabe wird bei einer Differentialschutzanordnung der oben angegebenen Art erfindungsgemäß eine dem Verhältnis von Summe oder Mittelwert der Absolutwerte der 2. Harmonischen mindestens zweier Phasen zum Absolutwert der Grundwelle einer Phase entsprechende Meßgröße gebildet ; diese Meßgröße wird auf einen vorgewählten Wert überwacht und beim Überschreiten dieses Wertes die Differentialschutzeinrichtung dieser einen Phase blockiert.

Die Erfindung beruht auf der Erkenntnis, daß der Rush-Strom einer Phase eines dreiphasigen Transformators einen größeren Anteil der 2. Harmonischen enthält, wenn der Rush-Strom in einer weiteren Phase einen kleinen Anteil der 2. Harmonischen aufweist. Addiert man also den Anteil der 2. Harmonischen der erstgenannten Phase und den Anteil der 2. Harmonischen in der weiteren Phase, dann steigt der Anteil der 2. Harmonischen, und es ist eine befriedigende Maßnahme gegen das fehlerhafte Auslösen infolge von Rush-Strömen geschaffen.

Weitere vorteilhafte Ausgestaltungen der erfindungsgemäßen Differentialschutzanordnung ergeben sich aus den Unteransprüchen.

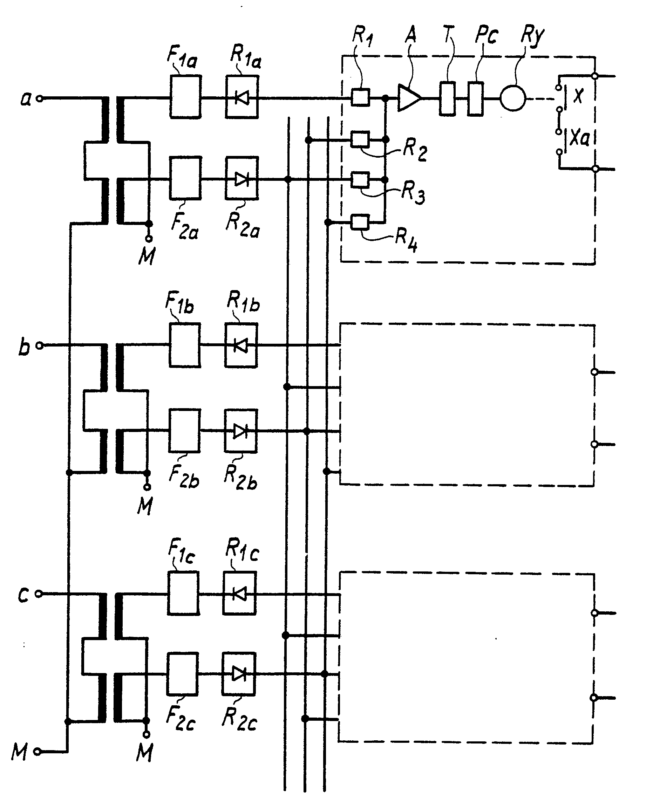

Zur Erläuterung der Erfindung ist in der Figur ein Blockschaltbild eines Ausführungsbeispiels der erfindungsgemäßen Differentialschutzanordnung dargestellt.

In der Figur sind mit a, b und c Eingangsklemmen der einzelnen Differentialschutzeinrichtungen der erfindungsgemäßen Differentialschutzanordnung bezeichnet. Die Differentialschutzanordnungen sind eingangsseitig mit Filtern $F_{1a}$, $F_{1b}$ und $F_{1c}$ versehen, die auf die Grundwelle des Netzes abgestimmt sind, indem sich der zu schützende mehrphasige Transformator befindet. Die Filter sind so abgestimmt, daß sie die Grundwelle passieren lassen. Eingangsseitig enthalten die Differentialschutzeinrichtungen jeder Phase weitere Filter $F_{2a}$, $F_{2b}$ und $F_{2c}$, um die 2. Harmonische zu erfassen. Den Filtern $F_{1a}$, $F_{1b}$ und $F_{1c}$

sind als Vollweggleichrichter ausgebildete Gleichrichter $R_{1a}$, $R_{1b}$ und $R_{1c}$ mit Glättungsmitteln nachgeordnet. Als Vollweggleichrichter ausgeführte weitere Gleichrichter $R_{2a}$, $R_{2b}$ und $R_{2c}$ mit Glättungsmitteln sind an die weiteren Filter $F_{2a}$, $F_{2b}$ und $F_{2c}$ angeschlossen. Widerstände $R_1$ bis $R_4$ bilden ein Summiernetzwerk. Dem Summiernetzwerk jeder Differentialschutzeinrichtung ist ein Operationsverstärker A nachgeordnet, an dessen Ausgang ein Zeitglied T liegt. Dem Zeitglied T ist eine Impulsverlängerungsschaltung PC nachgeordnet, die ein Ausgangsrelais $R_y$ beaufschlagt. Daran schließt sich der übrige, in üblicher Weise und daher hier nicht dargestellte Teil der Differentialschutzeirichtung dieser Phase an.

Die in der Figur strichliert gekennzeichneten Blöcke der an die Eingangsklemmen b und c angeschlossenen übrigen Differentialschutzeinrichtungen sind ähnlich ausgeführt und daher in der Figur im einzelnen nicht dargestellt. Die Ausgänge der Gleichrichter $R_{1a}$, $R_{1b}$ und $R_{1c}$ sind hinsichtlich der Polarität anders als die der weiteren Gleichrichter $R_{2a}$, $R_{2b}$ und $R_{2c}$ beschaltet ; so ist beispielsweise die negatives Potential führende Klemme der Gleichrichter $R_{1a}$, $R_{1b}$ und $R_{1c}$ und die positives Potential führende Klemme der weiteren Gleichrichter $R_{2a}$, $R_{2b}$ und $R_{2c}$ mit den nachgeordneten Teilen der einzelnen Differentialschutzeinrichtungen verbunden. Das Zeitglied T ist so eingestellt, daß es erst nach Beaufschlagung mit Impulsen von einer längeren Zeitdauer als einer Viertelperiode der Grundwelle ein Ausgangssignal abgibt.

Die dargestellte Differentialschutzanordnung arbeitet in folgender Weise :

Ein in üblicher Weise gewonnener Differenzstrom für jede Phase des dreiphasigen Transformators fließt über die Eingangsklemmen a, b und c der jeder Phase zugeordneten Differentialschutzeinrichtung. Bezeichnet man die Grundwelle und die zweite Harmonische der einzelnen Differentialschutzeinrichtungen mit $I_{1a}$, $I_{1b}$ und $I_{1c}$ sowie $I_{2a}$, $I_{2b}$ und $I_{2c}$, dann werden die Grundwellen $I_{1a}$, $I_{1b}$ und $I_{1c}$ von den Filtern $F_{1a}$, $F_{1b}$ und $F_{1c}$ erfaßt, während die 2. Harmonischen $I_{2a}$, $I_{2b}$ und $I_{2c}$ von den weiteren Filtern $F_{2a}$, $F_{2b}$ und $F_{2c}$ ausgesiebt werden. Die Ausgangsgrößen dieser Filter liegen an den als Vollweggleichrichter ausgebildeten Gleichrichtern $R_{1a}$, $R_{1b}$ und $R_{1c}$ sowie den weiteren Gleichrichtern $R_{2a}$, $R_{2b}$ und $R_{2c}$ ; beiden Gruppen von Gleichrichtern sind Glättungsmitteln nachgeordnet, die im einzelnen nicht dargestellt sind.

Da — wie oben bereits beschrieben — Ausgänge unterschiedlicher Polarität der Gleichrichter $R_{1a}$, $R_{1b}$ und $R_{1c}$ und der weiteren Gleichrichter $R_{2a}$, $R_{2b}$ und $R_{2c}$ benutzt werden, ergeben sich an den Ausgängen der Gleichrichter $R_{1a}$, $R_{1b}$ und $R_{1c}$ Werte $-/I_{1a}/$, $-/I_{1b}/$ und $-/I_{1c}/$, während an den Ausgängen der weiteren Gleichrichter $R_{2a}$, $R_{2b}$ und $R_{2c}$ die Werte $/I_{2a}/$, $/I_{2b}/$ und $/I_{2c}/$ anstehen.

Die Ausgangsgrößen der Gleichrichter sind einem Summiernetzwerk zugeführt, das die Widerstände $R_1$ bis $R_4$ enthält ; über diese Widerstände liegen die Ausgangsgrößen am Eingang eines Verstärkers, der von einem Operationsverstärker A gebildet ist. Die Widerstandswerte der Widerstände $R_1$ bis $R_4$ sind folgendermaßen festgesetzt : Die Widerstände $R_2$, $R_3$ und $R_4$ haben einen gleichgroßen Widerstandswert, der einen Bruchteil des Widerstandswertes des Widerstandes $R_1$ ausmacht. Durch Bemessung der Widerstände $R_1$ bis $R_4$ in dieser Weise wird dem Operationsverstärker A ein Strom zugeführt, dessen Wert $x \cdot (/I_{2a}/ + /I_{2b}/ + /I_{2c}/) - /I_{1a}/$ beträgt, da die Widerstände in der in der Figur dargestellten Weise angeordnet sind. Infolgedessen erzeugt der Operationsverstärker A ein Ausgangssignal in dem Falle, in dem der Absolutwert $/I_{1a}/$ der Grundwelle einer Phase größer als der Wert $x \cdot (/I_{2a}/ + /I_{2b}/ + /I_{2c}/)$ ist ; dieser Wert ist das x-fache der Absolutwerte der 2. Harmonischen in den einzelnen Phasen. Mit anderen Worten, der Operationsverstärker A erzeugt sein Ausgangssignal in dem Fall, in dem das Verhältnis der Summe der Absolutwerte der 2. Harmonischen in den einzelnen Phasen zum Absolutwert der Grundwelle einer Phase kleiner als ein vorgewählter Wert wird. Als Ergebnis folgt, daß der Operationsverstärker A sein Ausgangssignal nur dann abgibt, wenn die Bedingung

$$\frac{/I_{2a}/ + /I_{2b}/ + /I_{2c}/}{/I_{1a}/} < K \tag{1}$$

erfüllt ist, wobei der Wert K auf einen solchen Wert eingestellt ist, beispielsweise 26 %, der sich errechnet durch Dividieren des errechneten Minimums des Quotienten durch einen Sicherheitsfaktor von 1,5 ; so ist das Verhältnis des Widerstandswertes des Widerstandes $R_1$ zu den Widerstandswerten der Widerstände $R_2$, $R_3$ und $R_4$ bestimmt.

Da die Einstellung des Zeitgliedes T auf eine Viertelperiode der Grundwelle erfolgt, erzeugt das Zeitglied T ein Ausgangssignal nur dann, wenn die Ausgangsgröße des Operationsverstärkers A länger dauert. Die Ausgangsgrößen der Gleichrichter mit den nachgeordneten Glättungsmitteln enthalten mehr oder weniger stark pulsierende Anteile, und es ist durch das Zeitglied T verhindert, daß Fehlfunktionen infolge dieser pulsierenden Anteile oder aufgrund von Störungen auftreten können. Nach der eingestellten Zeit entstehen am Ausgang des Zeitgliedes T Impulse, die durch die Impulsverlängerungsschaltung Pc in ein Dauersignal umgesetzt werden. Auf das Ausgangssignal der Impulsverlängerungsschaltung Pc, gegebenenfalls nach dessen Verstärkung, wird das Ausgangsrelais $R_y$ erregt, wodurch der Kontakt X dieses Relais geschlossen wird. Dieser Kontakt X liegt in Reihe mit einem Ausgangskontakt $X_a$ der übrigen Teile der Differentialschutzeinrichtung, damit die Auslöseschaltung der Differentialschutzeinrichtung freigegeben werden kann.

Wie aus der vorangehenden Beschreibung hervorgeht, werden die Absolutwerte der 2. Harmonischen der entsprechenden Phasen summiert. Damit lassen sich folgende Wirkungen erreichen :

Bei einem Transformator, in dem Rush-Ströme entstehen, ergeben sich für die Grundwellen und die 2. Harmonischen im Rush-Strom, für das Verhältnis der 2. Harmonischen zu der Grundwelle der jeweiligen Phase und für das Verhältnis der Summe der Absolutwerte der 2. Harmonischen der entsprechenden Phasen zum Absolutwert der Grundwelle der jeweiligen Phase die in den folgenden Tabellen 1 und 2 aufgeführten Werte. Die Tabelle 1 gilt für den Fall, indem der Prozentsatz der 2. Harmonischen einer Phase klein ist, während die Tabelle 2 für den Fall gilt, daß der Prozentsatz der 2. Harmonischen von zwei Phasen klein ist.

TABELLE 1

| Phasen | Grundwelle Effektiver Wert $I_1$ (A) | 2. Harmonische Effektiver Wert $I_2$ (A) | $I_2/I_1$ (%) | $\frac{/I_{2a}/+/I_{2b}/+/I_{2c}/}{/I_1/}$ (%) |
|---|---|---|---|---|
| a | 13,29 | 2,59 | 19,5 | 70,3 |
| b | 6,34 | 3,37 | 53,1 | 147,3 |
| c | 8,71 | 3,43 | 39,4 | 107,2 |

TABELLE 2

| Phasen | Grundwelle Effektiver Wert $I_1$ (A) | 2. Harmonische Effektiver Wert $I_2$ (A) | $I_2/I_1$ (%) | $\frac{/I_{2a}/+/I_{2b}/+/I_{2c}/}{/I_1/}$ (%) |
|---|---|---|---|---|
| a | 6,87 | 2,05 | 29,8 | 75,4 |
| b | 1,94 | 0,96 | 49,3 | 267,0 |
| c | 6,47 | 2,17 | 33,5 | 80,1 |

Wie aus den Tabellen 1 und 2 hervorgeht, machen die erhaltenen Werte der 2. Harmonischen das 2- oder 3-fache des Wertes der 2. Harmonischen in einer Phase aus, und zwar sowohl dann, wenn der Prozentsatz der 2. Harmonischen einer Phase, als auch dann, wenn der Prozentsatz der 2. Harmonischen in zwei Phasen klein ist. Dies bedeutet, daß sogar dann, wenn eine Phase einen kleinen Prozentsatz 2. Harmonischer enthält, dies zum Erkennen eines Rush-Stromes ausreichend ist, so daß eine Fehlfunktion verhindert werden kann. Daher kann die Unterdrückung höherer Harmonischer so groß gewählt werden, daß eine fehlerhafte Nichtauslösung aufgrund höherer Harmonischer verhindert werden kann, die bei einem inneren Fehler auftreten.

Die vorangehende Beschreibung bezieht sich auf den Fall, in dem die Summe der Absolutwerte der 2. Harmonischen der entsprechenden Phasen benutzt wird. Wenn indessen die Widerstandswerte der Widerstände $R_2$ bis $R_4$ auf das Dreifache erhöht werden, kann der Mittelwert der Absolutwerte der 2. Harmonischen der entsprechenden Phase benutzt werden. Wird hier die Summe der Absolutwerte der 2. Harmonischen der entsprechenden Phasen benutzt, dann kann in der Bedingung

$$\frac{/I_{2a}/ + /I_{2b}/ + /I_{2c}/}{/I_1/} < K \qquad (2)$$

K einen höheren Wert haben, so daß der Schaltungsaufbau vereinfacht werden kann.

Gemäß der Erfindung wird in dem Fall, in dem der Prozentsatz der 2. Harmonischen in einer Phase klein ist und die Prozentsätze der 2. Harmonischen in den anderen Phasen groß sind, die 2. Harmonische der anderen Phase zu der der einen Phase mit dem geringen Prozentsatz addiert, so daß der Anteil der 2. Harmonischen vergrößert wird, um Gegenmaßnahmen gegen das Fehlauslösen durch Rush-Ströme zu erreichen. Dies führt vorteilhafterweise dazu, daß sogar dann, wenn die Unterdrückung höherer Harmonischer sehr empfindlich eingestellt wird, ein fehlerhaftes Nichtauslösen verhindert ist, wenn ein innerer Fehler auftritt.

**Ansprüche**

1. Differentialschutzanordnung für einen mehrphasigen Transformator mit jeweils einer Differentialschutzeinrichtung für jede Phase (a, b, c), wobei jede Differentialschutzeinrichtung ein auf die Grundwelle abgestimmtes Filter ($F_{1a}$, $F_{1b}$, $F_{1c}$) mit nachgeordnetem Gleichrichter ($R_{1a}$, $R_{1b}$, $R_{1c}$) und ein auf die 2. Harmonische abgestimmtes weiteres Filter ($F_{2a}$, $F_{2b}$, $F_{2c}$) mit nachgeordnetem weiteren Gleichrichter ($R_{2a}$, $R_{2b}$, $R_{2c}$) enthält, dadurch gekennzeichnet, daß eine dem Verhältnis von Summe oder Mittelwert der Absolutwerte ($I_{2a}$, $I_{2b}$, $I_{2c}$) der 2. Harmonischen mindestens zweier Phasen (a, b, c) zum

# 0 014 175

Absolutwert der Grundwelle einer Phase (z.B. a) entsprechende Meßgröße gebildet wird und daß diese Meßgröße auf einen vorgewählten Wert überwacht wird und beim Überschreiten dieses Wertes die Differentialschutzeinrichtung dieser einen Phase (z.B. a) blockiert.

2. Differentialschutzanordnung nach Anspruch 1, dadurch gekennzeichnet, daß eine an die Gleich-richter ($R_{1a}$, $R_{2a}$, $R_{1b}$, $R_{2b}$, $R_{1c}$, $R_{2c}$) angeschlossene elektronische Schaltungsanordnung ein Summiernetzwerk ($R_1$, $R_2$, $R_3$, $R_4$) enthält, dessen einer Widerstand ($R_1$) mit dem Ausgang des einen Gleichrichters ($R_{1a}$, $R_{1b}$, $R_{1c}$) und dessen weiterer Widerstand ($R_3$) mit dem Ausgang des weiteren Gleichrichters ($R_{2a}$, $R_{2b}$, $R_{2c}$) verbunden ist, und daß das Summiernetzwerk jeder Differentialschutzeinrichtung mindestens einen zusätzlichen Widerstand ($R_2$) enthält, der mit dem Ausgang eines weiteren Gleichrichters ($R_{2b}$) einer jeweils anderen Differentialschutzeinrichtung verbunden ist.

3. Differentialschutzanordnung nach Anspruch 2, dadurch gekennzeichnet, daß das Summiernetzwerk jeder Differentialschutzeinrichtung eine der Anzahl der übrigen Differentialschutzeinrichtungen entsprechende Anzahl von zusätzlichen Widerständen ($R_2$, $R_4$) enthält, die jeweils mit den Ausgängen der weiteren Gleichrichter ($R_{2b}$, $R_{2c}$) der jeweils übrigen Differentialschutzeinrichtungen verbunden sind.

4. Differentialschutzanordnung nach Anspruch 2 oder 3, dadurch gekennzeichnet, daß die Wider-standswerte des weiteren Widerstandes ($R_3$) und der zusätzlichen Widerstände ($R_2$, $R_4$) jedes Summiernetzwerkes übereinstimmen und einem Bruchteil des Widerstandswertes des einen Wider-standes ($R_1$) entsprechen.

5. Differentialschutzanordnung nach einem der vorangehenden Ansprüche, dadurch gekennzeichnet, daß an dem Ausgang eines den Widerständen ($R_1$, $R_2$, $R_3$, $R_4$) jedes Summiernetzwerkes nachgeordnetem Verstärkers (A) ein Zeitglied (T) angeschlossen ist, das derart bemessen ist, daß es nur bei eine Zeitdauer von einer Viertelperiode der Grundwelle überschreitenden Ausgangssignalen des Verstärkers (A) ein Steuersignal erzeugt.

6. Differentialschutzanordnung nach Anspruch 5, dadurch gekennzeichnet, daß dem Zeitglied (T) eine Impulsverlängerungsschaltung (Pc) nachgeordnet ist, an der ein Ausgangsrelais ($R_y$) der jeweiligen Differentialschutzeinrichtung angeschlossen ist.

## Claims

1. Differential protecting arrangement for a multiphase transformer comprising a differential protecting device for each phase (a, b, c), wherein each differential protecting device contains a filter ($F_{1a}$, $F_{1b}$, $F_{1c}$) which is tuned to the fundamental wave and followed by a rectifier ($R_{1a}$, $R_{ab}$, $R_{1c}$), and contains a further filter ($F_{2a}$, $F_{2b}$, $F_{2c}$) which is tuned to the 2nd harmonic and followed by a further rectifier ($R_{2a}$, $R_{2b}$, $R_{2c}$), characterised in that a measured variable, which corresponds to the radio of the sum or the mean value of the absolute values ($I_{2a}$, $I_{2b}$, $I_{2c}$) for the 2nd harmonic of at least two phases (a, b, c) to the absolute value of the fundamental wave of one phase (e.g. a), is formed and that this measured variable is monitored with respect to a pre-selected value and on overshooting this value, the differential protecting device of this one phase (e.g. a) is blocked.

2. Differential protecting arrangement as claimed in claim 1, characterised in that an electronic circuit arrangement which is connected to the rectifiers ($R_{1a}$, $R_{2a}$, $R_{1b}$, $R_{2b}$, $R_{1c}$, $R_{2c}$) contains a summing network ($R_1$, $R_2$, $R_3$, $R_4$) whose one resistor ($R_1$) is connected to the output of the one rectifier ($R_{1a}$, $R_{1b}$, $R_{1c}$) and whose further resistor ($R_3$) is connected to the output of the further rectifier ($R_{2a}$, $R_{2b}$, $R_{2c}$), and that the summing network of each differential protecting device contains at least one additional resistor ($R_2$) which is connected to the output of a further rectifier ($R_{2b}$) of a respective other differential protecting device.

3. Differential protective arrangement as claimed in claim 2, characterised in that the summing network of each differential protecting device contains a number of additional resistors ($R_2$, $R_4$) which corresponds to the number of the remaining differential protecting devices and which are respectively connected to the outputs of the further rectifiers ($R_{2b}$, $R_{2c}$) of the respectively remaining differential protecting devices.

4. Differential protecting arrangement as claimed in claim 2 or 3, characterised in that the resistance values of the further resistor ($R_3$) and of the additional resistors ($R_2$, $R_4$) of each summing network are identical and correspond to a fraction of the resistance value of the one resistor ($R_1$).

5. Differential protecting arrangement as claimed in one of the preceding claims, characterised in that at the output of an amplifier (A) which follow the resistors ($R_1$, $R_2$, $R_3$, $R_4$) of each summing network, there is connected a time element (T) which is so calculated that it only produces a control signal in the case of output signals of the amplifier (A) exceeding a time duration of a quarter period of the fundamental wave.

6. Differential protecting arrangement as claimed in claim 5, characterised in that the time element (T) is followed by a pulse lengthening circuit (Pc) to which an output relay ($R_y$) of the respective differential protecting device is connected.

## Revendications

1. Dispositif de protection différentielle pour un transformateur polyphasé comportant un dispositif

**0 014 175**

de protection différentielle pour chacune des phases (a, b, c), chaque dispositif de protection différentielle comportant un filtre ($F_{1a}$, $F_{1b}$, $F_{1c}$) accordé à l'onde fondamentale avec un premier redresseur aval ($R_{1a}$, $R_{1b}$, $R_{1c}$) et un filtre supplémentaire ($F_{2a}$, $F_{2b}$, $F_{2c}$) accordé au second harmonique avec redresseur supplémentaire aval ($R_{2a}$, $R_{2b}$, $R_{2c}$), caractérisé par le fait que l'on forme une grandeur de mesure qui correspond au rapport entre la somme ou la valeur moyenne des valeurs absolues ($I_{2a}$, $I_{2b}$, $I_{2c}$) du second harmonique d'au moins deux phases (a, b, c) et la valeur absolue de l'onde fondamentale d'une phase donnée (par exemple a), et que cette grandeur de mesure est contrôlée du point de vue d'une valeur choisie à l'avance et bloque, au dépassement de cette valeur, le dispositif de protection différentielle de ladite phase donnée (par exemple a).

2. Dispositif de protection différentielle selon la revendication 1, caractérisé par le fait qu'un circuit électronique relié aux redresseurs ($R_{1a}$, $R_{2a}$, $R_{1b}$, $R_{2b}$, $R_{1c}$, $R_{2c}$) comprend un réseau additionneur ($R_1$, $R_2$, $R_3$, $R_4$) dont une première résistance ($R_1$) est reliée à la sortie du premier redresseur ($R_{1a}$, $R_{1b}$, $R_{1c}$) et dont une autre résistance ($R_3$) est reliée à la sortie de l'autre redresseur ($R_{2a}$, $R_{2b}$, $R_{2c}$), et que le réseau additionneur comporte au moins une résistance additionnelle ($R_2$) qui est reliée à la sortie d'un redresseur supplémentaire ($R_{2b}$) d'un autre dispositif de protection différentielle.

3. Dispositif de protection différentielle selon la revendication 2, caractérisé par le fait que le réseau additionneur de chaque dispositif de protection différentielle comporte un nombre de résistances additionnelles ($R_2$, $R_4$) qui correspond au nombre des dispositifs de protection différentielle restants, et qui sont respectivement reliées aux sorties des redresseurs supplémentaires ($R_{2b}$, $R_{2c}$) des dispositifs de protection différentielle restants.

4. Dispositif de protection différentielle selon la revendication 2 ou 3, caractérisé par le fait que les valeurs ohmiques de ladite autre résistance ($R_3$) et des résistances additionnelles ($R_2$, $R_4$) de chaque réseau additionneur coïncident, et correspondent à une fraction de la valeur ohmique de ladite première résistance ($R_1$).

5. Dispositif de protection différentielle selon l'une des revendications précédentes, caractérisé par le fait qu'à la sortie d'un amplificateur (A) monté en aval des résistances ($R_1$, $R_2$, $R_3$, $R_4$) de chaque réseau additionneur est relié un circuit de temporisation (T) qui est dimensionné de telle manière qu'il n'émet un signal de commande que pour des signaux de sortie de l'amplificateur (A) qui dépassent une durée de un quart de période de l'onde fondamentale.

6. Dispositif de protection différentielle selon la revendication 5, caractérisé par le fait qu'au circuit de temporisation (T) est relié en aval un circuit de prolongation des impulsions (Pc), auquel est relié un relais de sortie ($R_y$) du dispositif de protection différentielle concerné.

6